# EUROPÄISCHE PATENTSCHRIFT

(11) **EP 1 387 772 B1**
(45) Veröffentlichungstag und Bekanntmachung des Hinweises auf die Patenterteilung: **02.11.2005**
(21) Anmeldenummer: 02742723.6
(22) Anmeldetag: 08.05.2002
(51) Int. Cl.: B60B 9/00, B60B 33/04

(54) **FEDERUNGSEINRICHTUNG**
SUSPENSION DEVICE
DISPOSITIF DE SUSPENSION

(30) Priorität: 14.05.2001 DE 20108132 U
(43) Veröffentlichungstag der Anmeldung: 11.02.2004
(73) Patentinhaber: Mödlhammer, Raimund, 12309 Berlin (DE)
(72) Erfinder: Mödlhammer, Raimund, 12309 Berlin (DE)
(86) Internationale Anmeldenummer: PCT/DE2002/001659
(87) Internationale Veröffentlichungsnummer: WO 2002/092362

(56) Entgegenhaltungen:
- EP-A- 0 601 581
- US-A- 2 285 656
- US-A- 2 544 924
- US-A- 2 721 766
- US-A- 4 649 595
- US-A- 5 493 755

## Beschreibung

Die Erfindung betrifft eine Federungseinrichtung entsprechend dem Oberbegriff des Anspruchs 1.

Aus den Patentschriften US 2 443 900, US 2 721 766 und DE-PS 567 164 sind Federungseinrichtungen für Rollen und Räder bekannt. Diese Einrichtungen weisen eine in Bezug zur Radachse exzentrisch angeordnete Tragachse auf, um welche die Nabe des Rades schwenken kann. Ein federndes Element stützt die Nabe gegenüber einem fest stehenden Teil ab. Fährt das Rad gegen ein Hindernis, so führt die Nabe eine Schwenkbewegung aus, wodurch das Rad dem Hindernis ausweicht.

Der Nachteil dieser bekannten Federungseinrichtungen liegt in der Schwierigkeit, eine platzsparende und kostengünstige Ausführung zu verwirklichen, die es ermöglicht, ein Federungsverhalten zu erreichen, das einer ganz bestimmten vorgegebenen Federkennlinie entspricht. Meist erfordert die vorgegebene Federkennlinie eine Federdimensionierung, die im vorgegebenen Bauraum nicht untergebracht werden kann. Auch erweisen sich die Herstellung und der Zusammenbau als aufwendig, weil die Konstruktion aus vielen Teilen besteht. Die aus der Patentschrift US 5 493 755 bekannte, gattungsgemäße Federungseinrichtung verwendet ein Federelement aus Elastomer, welches auf Torsion beansprucht wird. Diese Ausführung erlaubt keine großen Schwenkwinkel und belastet außerdem das Material auf eine Weise, die das Volumen des Federelementes nicht optimal ausnutzt. Es kommt zu einer Überlastung der äußeren Zone, während innen liegende Bereiche noch nicht optimal belastet sind.

Die Aufgabe der Erfindung besteht darin, eine Federungseinrichtung der hier vorliegenden Art so weiterzuentwickeln, dass der erforderliche Herstellungsaufwand gegenüber bisher bekannten Federungseinrichtungen verringert wird, dass ein modularer Aufbau möglich ist und dass die Kennlinie der Federung mit einfachen Mitteln veränderbar ist.

Die Aufgabe der Erfindung wird durch die kennzeichnenden Merkmale des Anspruches 1 gelöst.

Die Erfindung hat den Vorteil, dass die Federungseinrichtung aus wenigen Bauteilen, und ohne großen Bauraum zu beanspruchen, hergestellt werden kann. Das Federelement wird lediglich auf Druck oder Schub belastet. Als Widerlagerelement kann ein einfaches längliches Bauteil mit zum Beispiel rundem Querschnitt verwendet werden. An der Radaufnahme sind nur zwei Durchbrüche für die Aufnahme des Widerlagerelementes erforderlich. Gegenüber einer konventionellen Rolle ohne jegliche Federung erhöht sich der Aufwand an Bauteilen lediglich um 3 Elemente, nämlich um den Nabenkörper, das Federelement und das Widerlagerelement. Außerdem kann das Federelement aufgrund des modularen Aufbaues der Federungseinrichtung beim Einbau der Rolle den zu erwartenden Anforderungen entsprechend ausgewählt (Federkennlinie) und später auch mit wenig Aufwand ausgewechselt werden. Das Material des Federelementes wird optimal ausgenutzt, wobei bei langer Lebensdauer im begrenzten Bauraum des Nabenkörpers eine Federung mit einem großen Arbeitsvermögen realisiert werden kann.

Die Erfindung wird anhand von Ausführungsbeispielen näher erläutert. Es zeigt
Fig. 1 eine Explosionsdarstellung einer Ausführung mit zwei Lagern;
Fig. 2 eine Schnittdarstellung von Fig. 1 bei unbelastetem Zustand;
Fig. 3 eine Schnittdarstellung von Fig. 2 in belastetem Zustand;
Fig. 4 und 5 je eine Explosionsdarstellung einer Ausführung für ein einzelnes Lager sowie
Fig. 6 eine seitliche Ansicht von Fig. 5.

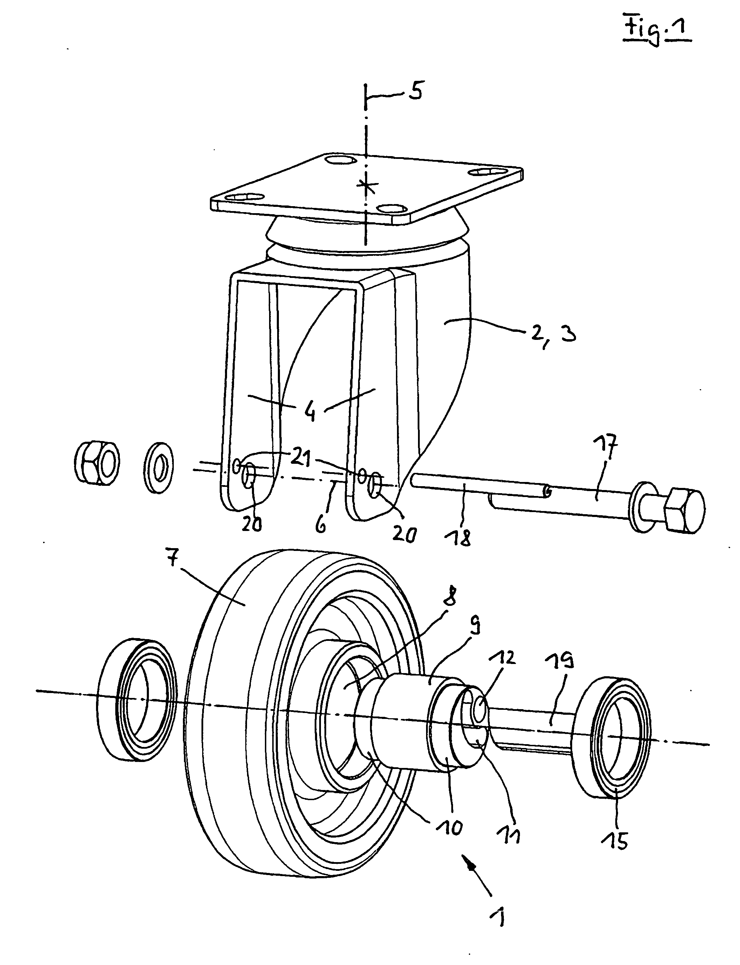

Die nachfolgend beschriebenen Federungseinrichtungen 1 lassen sich bei Rädern 7 verwirklichen, die von beliebig gestaltbaren Radaufnahmen getragen werden.
Das Ausführungsbeispiel gemäß Fig. 1 zeigt eine Federungseinrichtung 1, die beispielsweise an einer als Lenkrolle ausgebildeten Laufrolle 2 vorgesehen ist. Die um eine vertikale Achse 5 verschwenkbare Laufrolle 2 weist eine Radaufnahme 3 auf, die zum Tragen eines auf einer horizontalen Achse (Laufachse) drehbar gelagerten Rades 7 und zum Tragen der Federungseinrichtung 1 bestimmt ist. Die Federungseinrichtung 1 weist einen zylindrischen Nabenkörper 9, ein Federelement 19 und ein Widerlagerelement 18 auf. Das Rad 7 ist mit einem zylindrischen Durchbruch 8 ausgestattet, der zur Aufnahme des Nabenkörpers 9 bestimmt ist, wobei der Außendurchmesser des Nabenkörpers 9 geringfügig kleiner ist als der Innendurchmesser des zylindrischen Durchbruches 8. Der Nabenkörper 9 besitzt zwei auf Abstand gehaltene zylindrische Lagersitze 10, die zur Aufnahme von zwei bevorzugt als Wälzlager ausgebildeten Lagern 15 bestimmt sind, wobei die Lager 15 im zylindrischen Durchbruch 8 passgenau eingesetzt sind. Der Nabenkörper 9 weist einen horizontal verlaufenden Raum 11 in Form eines bogenförmigen Schlitzes auf, durch den das im Beispiel als Stab ausgebildete Widerlagerelement 18 hindurchgeführt ist. Im Raum 11 ist auch das Federelement 19 untergebracht, das beispielsweise als Elastomer ausgebildet ist und mit dem Widerlagerelement 18 zusammenwirkt. In einem Abstand zum Raum 11 weist der Nabenkörper 9 eine horizontal verlaufende Durchgangsbohrung 12 auf, die zur Aufnahme einer Tragachse 17 vorgesehen ist, mit deren Hilfe das Rad 7 an den Gabelschenkeln 4 der Radaufnahme 3 befestigbar ist. Jeder Gabelschenkel 4 weist zu diesem Zweck einen horizontal verlaufenden, auf einer gemeinsamen Achse 6 gelegenen ersten Durchbruch 20 auf, um die Tragachse 17 an den Gabelschenkeln 4 fixieren zu können. In einem Abstand zu den ersten Durchbrüchen 20 ist an jedem Gabelschenkel 4 je ein zweiter horizontal angeordneter Durchbruch 21 vorgesehen, wobei der Durchbruch 21 zur Aufnahme und zum Fixieren des Widerlagerelementes 18 vorgesehen ist. Befestigungsmittel der üblichen Art dienen zum Arretieren der Tragachse 17 und des parallel zur Tragachse 17 angeordneten Widerlagerelementes 18 an den Gabelschenkeln 4. Der Nabenkörper 9 ist dabei mit geringem seitlichen Spiel zwischen den Gabelschenkeln 4 angeordnet. In montiertem Zustand der Federungseinrichtung 1 liegt das Federelement 19 entweder bereits mit leichtem Druck am Widerlagerelement 18 an oder es ist aus Gründen einer leichteren Montage zwischen dem Federelement 19 und dem Widerlager-element 18 ein kleines Spiel gewählt. Bei Belastung des Rades 7 vollführt der Nabenkörper 9, und damit das Rad 7, eine Schwenkbewegung, so dass das im Raum 11 formschlüssig untergebrachte Federelement 19 gegen das ortsfest angeordnete Widerlagerelement 18 gedrückt wird. Bei diesem Einfederungsvorgang wird das Federelement 19 verformt und nimmt Energie auf Entlastet man das Rad 7, gibt das Federelement 19 Energie ab, so dass das Rad, einem Ausfederungsvorgang gleich, in die Ausgangsposition zurückkehrt. Das Federelement 19 kann auch so ausgeführt sein, dass es sowohl am Nabenkörper 9 als auch an der Radaufnahme 3 befestigt ist.

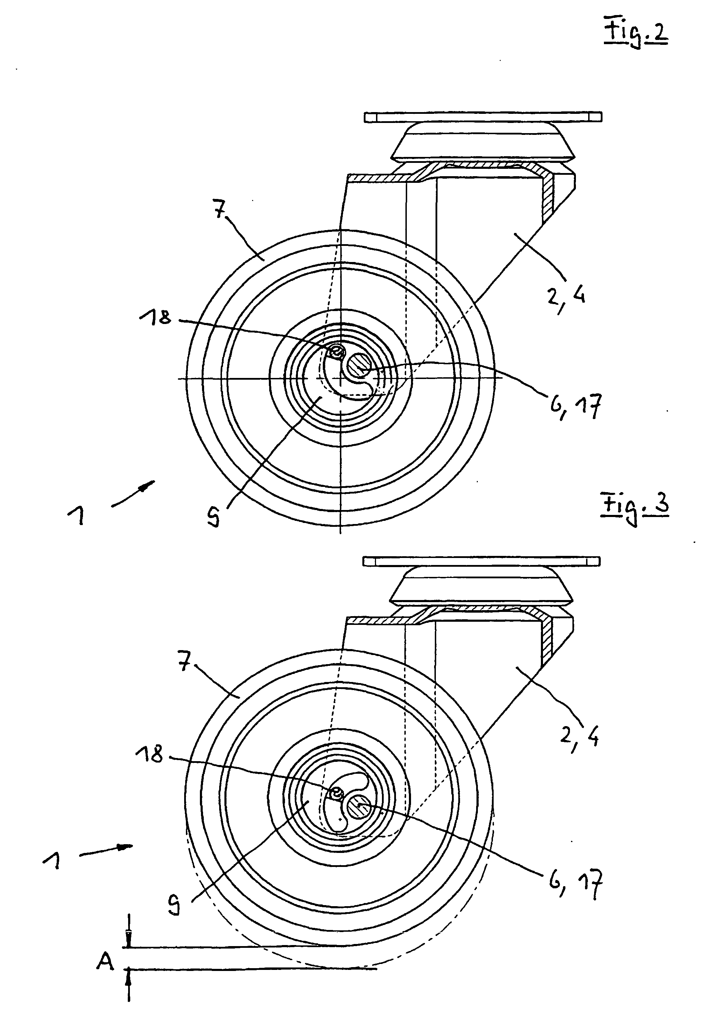

Anhand der Figuren 2 und 3 lässt sich die Wirkung der Federungseinrichtung 1 treffend beschreiben. Die Laufrolle 2 ist jeweils in Seitenansicht und teilweise geschnitten dargestellt. Auf die in Fig. 2 dargestellte Laufrolle 2 wirkt keine Tragkraft, während die gleiche Laufrolle 2 in der Darstellung nach Fig. 3 einer Tragkraft ausgesetzt ist, die das begrenzte Verschwenken des Rades 7 mit dem Nabenkörper 9 um die horizontale Achse 6 der Tragachse 17 bewirkt. Die letztendlich auf das Rad 7 einwirkende Tragkraft drückt das Rad 7, in der Zeichnung rechtsdrehend, um das Maß A nach oben, wobei das in den Gabelschenkeln 4 abgestützte Widerlagerelement 18 gegen das Federelement 19 drückt und dieses ein Stück weit zusammenpresst. Ist die auf das Rad 7 einwirkende Tragkraft gering, weicht auch das Rad 7 nur geringfügig aus und Maß A ist kleiner. Ist die Tragkraft hingegen groß, bewirkt diese ein starkes Ausweichen des Rades 7 und ein dementsprechend starkes Zusammenpressen des Federelementes 19. Das Zusammenpressen des Federelementes 19 verursacht somit ein stoßdämpfendes Abfedern des Rades 7, so dass die Federungseinrichtung 1 in vorteilhafter Weise insgesamt ein Abfedern der Laufrolle 2 bei in der Praxis auftretenden Stößen und Belastungen bewirkt.

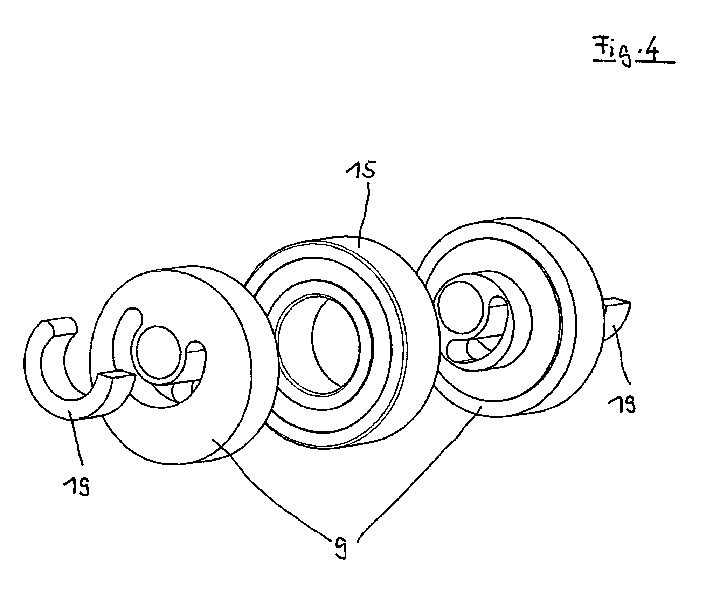

Fig. 4 zeigt ein Ausführungsbeispiel, bei dem der Nabenkörper 9 zweiteilig und symmetrisch ausgebildet ist, so dass das Rad 7 auch mit nur einem Lager 15 ausgestattet werden kann. Im Beispiel ist für jeden Nabenkörper 9 ein Federelement 19 vorgesehen. Ein mit diesen Teilen ausgestattetes Rad 7 lässt sich in eine Radaufnahme 3 zum Beispiel so einbauen, wie dies in den Figuren 1 bis 3 beschrieben ist.

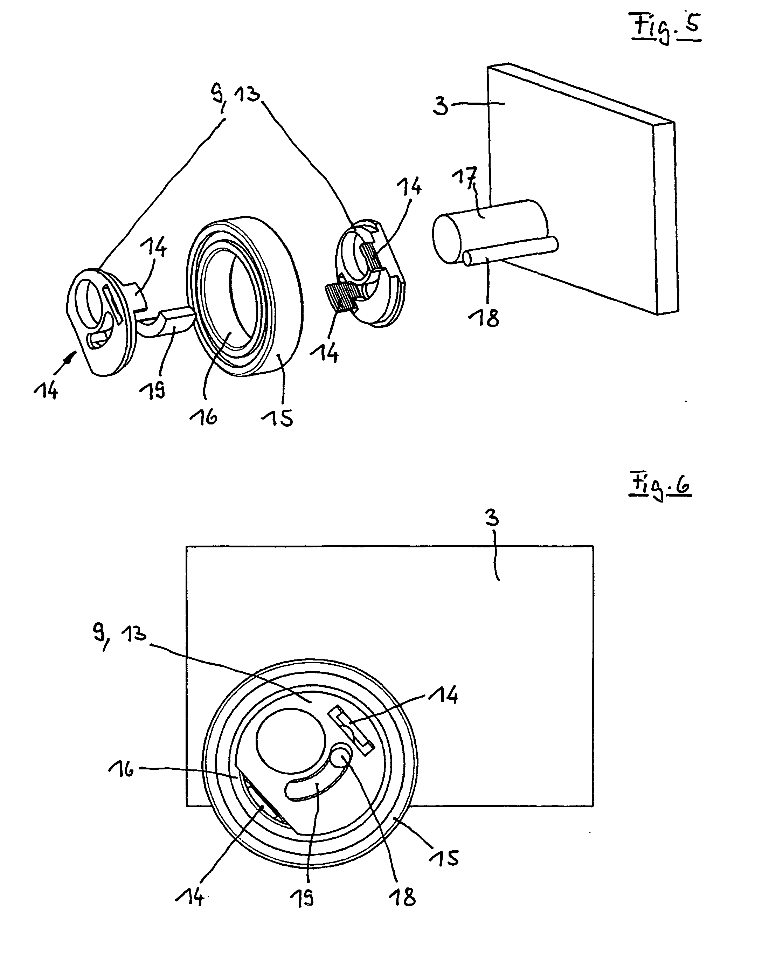

Fig. 5 und Fig. 6 zeigen eine Ausführung, bei welcher der Nabenkörper 9 zweigeteilt ist und die beiden Hälften 13 des so ausgebildeten Nabenkörpers 9 identisch sind und jeweils eine Zunge 14 mit Rastverzahnung an der Innenseite und eine Zunge 14 mit Rastverzahnung an der Außenseite aufweisen, wobei die Zungen 14 so angeordnet sind, dass beim Einsetzen der beiden Hälften 13 des Nabenkörpers 9 in den Innenring 16 des Lagers 15 die Zunge 14 mit Rastverzahnung an der Innenseite der einen Hälfte 13 jeweils in die gegenüberliegende Zunge 14 mit Rastverzahnung an der Außenseite der anderen Hälfte 13 eingreift. Eine fein gestufte Rastverzahnung ermöglicht es, mit nur einer Ausführung eines Nabenkörpers 9, Lager 15 unterschiedlicher Breite zu verwenden. Das Federelement 19 ist platzsparend zwischen den beiden Hälften 13 des Nabenkörpers 9 untergebracht. Die beschriebene Anordnung lässt sich in ein Rad 7 einbauen und das so gestaltete Rad 7 entsprechend der eingangs beschriebenen Weise an einer Radaufnahme 3 befestigen.

Alternativ kann als Federelement 19 eine Schenkelfeder vorgesehen werden, deren eines Ende im Nabenkörper 9 eingreift und deren zweites Ende die Tragachse 17 so fest umschlingt, dass ausreichender Reibschluß erreicht wird oder auf eine andere geeignete Weise mit einem festen Teil verbunden ist.

Ebenfalls alternativ ist es möglich, auf das Rad 7 zu verzichten und die Funktion des Rades 7 auf wenigstens ein Lager 15 zu übertragen. Bei Verwendung von nur einem Lager 15 als Radersatz wäre dann der Nabenkörper 9 durch zwei ineinander verrastbare Hälften 13 zu bilden, siehe Fig. 5 und in den Innenring 16 eines Lagers 15 einzusetzen. Diese Anordnung lässt sich ebenfalls in eine Radaufnahme 3 einbauen.

Schließlich ist es denkbar, anstelle von nur einem Widerlagerelement 18 ein weiteres derartiges Element vorzusehen, wobei jedes Widerlagerelement 18 ortsfest an einer entsprechend gestalteten Radaufnahme 3 anzuordnen wäre.

## Patentansprüche

1. Federungseinrichtung (1) für ein Rad (7), das von einer Radaufnahme (3) getragen wird, mit wenigstens einem Nabenkörper (9), der im Rad (7) angeordnet ist und zusammen mit dem Rad (7) um eine an der Radaufnahme (3) befindlichen Tragachse (17) begrenzt verschwenkbar gelagert ist, wobei die Tragachse (17) in einem Abstand zur Laufachse des Rades (7) angeordnet ist und wobei mindestens ein Federelement (19) vorgesehen ist, das mit dem wenigstens einen Nabenkörper (9) in einer die Schwenkbewegung des Nabenkörpers (9) abfedernden Weise zusammenwirkt, **dadurch gekennzeichnet, dass** die Radaufnahme (3) mindestens ein in einem Abstand zur Tragachse (17) angeordnetes Widerlagerelement (18) trägt, an dem der wenigstens eine Nabenkörper (9) mit Hilfe des mindestens einen Federelementes (19) abgestützt oder abstützbar ist.

2. Federungseinrichtung nach Anspruch 1, **dadurch gekennzeichnet, dass** das wenigstens eine Federelement (19) zur Aufnahme von Druck- und Schubbelastungen bestimmt ist.

3. Federungseinrichtung nach Anspruch 1 oder 2, **dadurch gekennzeichnet, dass** der Nabenkörper (9) einen zur Aufnahme des mindestens einen Federelementes (19) bestimmten Raum (11) aufweist, durch welchen das wenigstens eine Widerlagerelement (18) hindurchgeführt ist.

4. Federungseinrichtung nach Anspruch 3, **dadurch gekennzeichnet, dass** der Raum (11) als bogenförmiger Schlitz gestaltet ist.

5. Federungseinrichtung nach einem der Ansprüche 1 bis 4, **dadurch gekennzeichnet, dass** der Nabenkörper (9) durch zwei zusammenfügbare Hälften (13) gebildet ist.

6. Federungseinrichtung nach Anspruch 5, **dadurch gekennzeichnet, dass** die Hälften (13) des Nabenkörpers (9) rastschlüssig miteinander verbindbar sind.

7. Federungseinrichtung nach einem der Ansprüche 1 bis 6, **dadurch gekennzeichnet, dass** das wenigstens eine Federelement (19) als Elastomer ausgebildet ist.

8. Federungseinrichtung nach einem der Ansprüche 1 bis 7, **dadurch gekennzeichnet, dass** der wenigstens eine Nabenkörper (9) in einem Lager (15) untergebracht ist.

9. Federungseinrichtung nach Anspruch 8, **dadurch gekennzeichnet, dass** das Lager (15) als Rad (7) ausgebildet ist.

## Claims

1. A suspension device (1) for a wheel (7) carried by a wheel mount (3), comprising at least one hub body (9) which is arranged in the wheel (7) and, together with the wheel (7), is mounted so as to be pivotable to a limited extent about a supporting axle (17) provided on the wheel mount (3), wherein the supporting axle (17) is spaced from the carrying axis of the wheel (7) and wherein at least one spring member (19) is provided which co-operates with the at least one hub body (9) so as to cushion the pivoting movement of the hub body (9), **characterised in that** the wheel mount (3) carries at least one abutment member (18) which is spaced from the supporting axle (17) and on which the at least one hub body (9) is supported or is supportable by means of the at least one spring member (19).

2. A suspension device according to claim 1, **characterised in that** the at least one spring member (19) is intended to absorb compressive and axial loads.

3. A suspension device according to claim 1 or 2, **characterised in that** the hub body (9) has a space for receiving the at least one spring member (19) and through which the at least one abutment member (18) is guided.

4. A suspension device according to claim 3, **characterised in that** the space (11) is formed as a curved slot.

5. A suspension device according to any one of claims 1 to 4, **characterised in that** the hub body (9) is formed by two connectable halves (13).

6. A suspension device according to claim 5, **characterised in that** the halves (13) of the hub body (9) are connectable to one another in a snap-locking manner.

7. A suspension device according to any one of claims 1 to 6, **characterised in that** the at least one spring member (19) is formed as an elastomer.

8. A suspension device according to any one of claims 1 to 7, **characterised in that** the at least one hub body (9) is housed in a bearing (15).

9. A suspension device according to claim 8, **characterised in that** the bearing (15) is formed as a wheel (7).

## Revendications

1. Dispositif de suspension (1) pour une roue (7) portée par un réceptacle de roue (3), comprenant au moins un corps de moyeu (9) situé dans la roue (7) et monté de manière à pouvoir pivoter de façon limitée avec la roue (7) autour d'un axe porteur (17) situé sur le réceptacle de roue (3), l'axe porteur (17) étant situé à distance de l'axe de roulement de la roue (7) et au moins un élément à ressort (19) étant prévu, qui coopère avec le au moins un corps de moyeu (9) d'une manière qui permet d'amortir le mouvement pivotant du corps de moyeu (9), **caractérisé en ce que** le réceptacle de roue (3) porte au moins un élément de butée (18) placé à distance de l'axe porteur (17), sur lequel le au moins un corps de moyeu (9) prend appui ou peut prendre appui à l'aide du au moins un élément à ressort (19).

2. Dispositif de suspension selon la revendication 1, **caractérisé en ce que** le au moins un élément à ressort (19) est destiné à absorber des charges de compression et de cisaillement.

3. Dispositif de suspension selon la revendication 1 ou 2, **caractérisé en ce que** le corps de moyeu (9) présente un espace (11) destiné à recevoir le au moins un élément à ressort (19), à travers lequel passe le au moins un élément de butée (18).

4. Dispositif de suspension selon la revendication 3, **caractérisé en ce que** l'espace (11) est conçu en tant que fente en arc de cercle.

5. Dispositif de suspension selon l'une des revendications 1 à 4, **caractérisé en ce que** le corps de moyeu (9) est formé par deux moitiés (13) pouvant être assemblées.

6. Dispositif de suspension selon la revendication 5, **caractérisé en ce que** les moitiés (13) du corps de moyeu (9) peuvent être assemblées entre elles par enclenchement.

7. Dispositif de suspension selon l'une des revendications 1 à 6, **caractérisé en ce que** le au moins un élément à ressort (19) est réalisé en tant qu'élastomère.

8. Dispositif de suspension selon l'une des revendications 1 à 7, **caractérisé en ce que** le au moins un élément à ressort (19) est logé dans un palier (15).

9. Dispositif de suspension selon la revendication 8, **caractérisé en ce que** le palier (15) est réalisé en tant que roue (7).
